# EUROPEAN PATENT APPLICATION

(11) **EP 4 261 717 A2**
(43) Date of publication of application: **18.10.2023**
(21) Application number: 23162160.8
(22) Date of filing: 15.03.2023
(51) Int. Cl.: G06F 21/31, B60R 25/20

(54) **SYSTEMS AND METHODS FOR COMMUNICATING WITH THIRD PARTIES EXTERNAL TO AUTONOMOUS VEHICLES**

(30) Priority: 21.03.2022 US 202263269669 P
(71) Applicant: TuSimple, Inc., San Diego, CA 92122 (US)
(72) Inventor: Tam, Joyce, Pleasanton (US); Shi, Zhujia, San Diego (US); Poorsartep, Mohammad, San Diego (US); Overmon, Neil M., Redwood City (US); Foster, Scott Douglas, San Diego (US)
(74) Representative: Hamer, Thomas Daniel

(57) **Abstract**

An apparatus and method for communicating with third parties external to autonomous vehicles are disclosed. In one aspect, the apparatus may be configured to receive a signal from a first user interface mounted to an exterior of an autonomous vehicle, establish a two way communication between the first user interface and a remote system, authenticate a third party, and in response to the third party being authenticated, establish a connection with a second user interface.

## Description

### BACKGROUND

### Field

The present disclosure relates generally to autonomous vehicles. More particularly, the present disclosure is related to systems and methods for communicating with third parties external to an autonomous vehicle.

### Description of the Related Art

One aim of autonomous vehicle technologies is to provide vehicles that can safely navigate towards a destination with limited or no driver assistance. The safe navigation of an autonomous vehicle (AV) from one point to another may include the ability to signal other vehicles, navigating around other vehicles in shoulders or emergency lanes, changing lanes, biasing appropriately in a lane, and navigating all portions or types of highway lanes.

Autonomous vehicles may be configured to pull over to the side of the road under certain conditions, such as unsafe environmental conditions and/or mechanical/electrical malfunctions. When stopped at the side of the road, it may be desirable to provide the capability for certain third parties to communicate with the autonomous vehicle and/or an oversight system remote from the autonomous vehicle.

### SUMMARY OF CERTAIN INVENTIVE ASPECTS

In one aspect, there is provided an apparatus comprising: at least one processor; and at least one memory including computer program code, the at least one memory and the computer program code configured to, with the at least one processor, cause the apparatus to: receive a signal from a first user interface mounted to an exterior of an autonomous vehicle; in response to the signal being received, establish a two way communication between the first user interface and a remote system; authenticate a third party; in response to the third party being authenticated, establish a connection with a second user interface.

In some embodiments, to authenticate the third party, the at least one memory and computer program code are configured to, with the at least one processor, further cause the apparatus to: receive, from the first user interface, login credentials; send the login credentials to the remote system; and receive, from the remote system, and indication that the third party is authenticated.

In some embodiments, the login credentials comprise at least one of a badge number, a security code, a user name, and a password.

In some embodiments, the at least one memory and computer program code are configured to, with the at least one processor, further cause the apparatus to: in response to the third party being authenticated, provide an access to the second user interface.

In some embodiments, the second user interface is mounted to an interior compartment of an autonomous vehicle and wherein to provide access to the second user interface, the at least one memory and computer program code are configured to, with the at least one processor, further cause the apparatus to provide access to the interior compartment of the autonomous vehicle.

In some embodiments, the second user interface comprises or is comprised in a mobile telephone or smartphone.

In some embodiments, the at least one memory and computer program code are configured to, with the at least one processor, further cause the apparatus to:
receive, from the second user interface, an incident report including information regarding an accident involving the autonomous vehicle.

In some embodiments, the at least one memory and computer program code are configured to, with the at least one processor, further cause the apparatus to: display, at the second user interface, at least one of a selectable list of incident descriptions and a text field.

In some embodiments, the at least one memory and computer program code are configured to, with the at least one processor, further cause the apparatus to: receive, from the second user interface, a request to disengage an autonomous mode of the autonomous vehicle; and in response to the request to disengage being received, disengage the autonomous system from the autonomous vehicle in order to enable manual operation of the autonomous vehicle.

In some embodiments, the at least one memory and computer program code are configured to, with the at least one processor, further cause the apparatus to: receive, from the second user interface, a request to display an inspection report; and in response to the request to display the inspection report being received, display a report in compliance with local regulations.

In some embodiments, the displayed report comprises at least one of a health status of the autonomous vehicle health status, a maintenance history of the autonomous vehicle, a pre trip inspection report for the autonomous vehicle, and a driver vehicle inspection report for the autonomous vehicle.

In some embodiments, the at least one memory and computer program code are configured to, with the at least one processor, further cause the apparatus to: record information displayed in the report, and transmit the recorded information to the remote system to enable a tracking and/or auditing of the autonomous vehicle.

In some embodiments, the signal received from the first user interface comprises an emergency stop signal.

In some embodiments, the at least one memory and computer program code are configured to, with the at least one processor, further cause the apparatus to: receive, from the second user interface, a request to diagnose a breakdown of the autonomous vehicle; in response to the request to diagnose the breakdown being received, send, to the second user interface, a set of troubleshooting questions; and receive, from the second user interface, responses to the set of troubleshooting questions.

In some embodiments, the at least one memory and computer program code are configured to, with the at least one processor, further cause the apparatus to: generate a recommendation for addressing the breakdown based on the received responses; and send, to the second user interface, a request to display the recommendation.

In some embodiments, the recommendation comprises at least one of a text description of the recommendation, a set of one or more pictographs of the recommendation, a video illustrating the recommendation, and a voice command describing the recommendation.

In some embodiments, the at least one memory and computer program code are configured to, with the at least one processor, further cause the apparatus to: receive, from the second user interface, a description of a path the autonomous vehicle can use to navigate an accident scene; send, to the remote system, the description of the path; and receive, from the remote system, navigation commands to enable the autonomous vehicle to navigate the accident scene.

In some embodiments, the navigation commands received from the remote system comprises a remote control of the autonomous vehicle by the remote system.

In some embodiments, the two way communication comprises at least one of a speech to text and a text to speech communication.

In some embodiments, the at least one memory and computer program code are configured to, with the at least one processor, further cause the apparatus to: receive images from a camera located on the autonomous vehicle; detect that a person is present in the images; and determine that the person is exhibiting hand signals in order to direct traffic.

In some embodiments, the at least one memory and computer program code are configured to, with the at least one processor, further cause the apparatus to: interpret the hand signals exhibited by the person; provide controls for navigating the autonomous vehicle based on the interpreted hand signals.

In some embodiments, to provide controls for navigating the autonomous vehicle, the at least one memory and computer program code are configured to, with the at least one processor, further cause the apparatus to: transmit, to the remote system, the images including the hand signals; receive, from the remote system, an interpretation of the hand signals; and provide controls for navigating the autonomous vehicle based on the received interpretation.

In another aspect, there is provided a method comprising: receiving a signal from a first user interface mounted to an exterior of an autonomous vehicle; in response to receiving the signal from the first user interface, establish a two way communication between the first user interface and a remote system; authenticating a third party; and in response to authenticating the third party, establishing a connection with a second user interface.

In yet another aspect, there is provided a non-transitory or transitory computer-readable medium storing computer program instructions which, when executed by at least one processor, cause the at least one processor to: receive a signal from a first user interface mounted to an exterior of an autonomous vehicle; in response to the signal being received, establish a two way communication between the first user interface and a remote system; authenticate a third party; in response to the third party being authenticated, establish a connection with a second user interface.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 illustrates a schematic diagram of a system including an autonomous vehicle.
FIG. 2 shows a flow diagram for operation of an autonomous vehicle (AV) safely in light of the health and surroundings of the AV.
FIG. 3 illustrates a system that includes one or more autonomous vehicles, a control center or oversight system with a human operator (e.g., a remote center operator (RCO)), and an interface for third party interaction.
FIG. 4 illustrates an example autonomous vehicle having a communication system for communicating with third parties in accordance with aspects of this disclosure.
FIG. 5 illustrates an example user interface in accordance with aspects of this disclosure.
FIG. 6 is a flowchart illustrating a method for interacting with a third party in the event of the autonomous vehicle being involved in an accident in accordance with aspects of this disclosure.
FIG. 7 is a flowchart illustrating a method for interacting with a third party in the event of the autonomous vehicle arriving at a roadside inspection in accordance with aspects of this disclosure.
FIG. 8 is a flowchart illustrating a method for interacting with a third party in the event of the autonomous vehicle experiencing a breakdown in accordance with aspects of this disclosure.
FIG. 9 is a flowchart illustrating a method for interacting with a third party in the event of the autonomous vehicle arriving at an accident scene in accordance with aspects of this disclosure.
FIG. 10 is a flowchart illustrating a method for interacting with a third party in the event of the autonomous vehicle arriving at a construction site in accordance with aspects of this disclosure.

### DETAILED DESCRIPTION

Vehicles traversing highways and roadways are legally required to comply with regulations and statutes in the course of safe operation of the vehicle. For autonomous vehicles (AVs), particularly autonomous tractor trailers, the ability to recognize a malfunction in its systems and stop safely are necessary for lawful and safe operation of the vehicle. Described below in detail are systems and methods for the safe and lawful operation of an autonomous vehicle on a roadway, including the execution of maneuvers that bring the autonomous vehicle in compliance with the law while signaling surrounding vehicles of its condition.

Aspects of this disclosure relate to systems and techniques which provide a communication interface for third parties to communicate with an autonomous vehicle and/or an oversight system. In particular, it is desirable to provide authorized third parties to communicate with an autonomous vehicle and an oversight system when the autonomous vehicle has stopped on or near a roadway in order to help address the circumstances that led to the autonomous vehicles stopping.

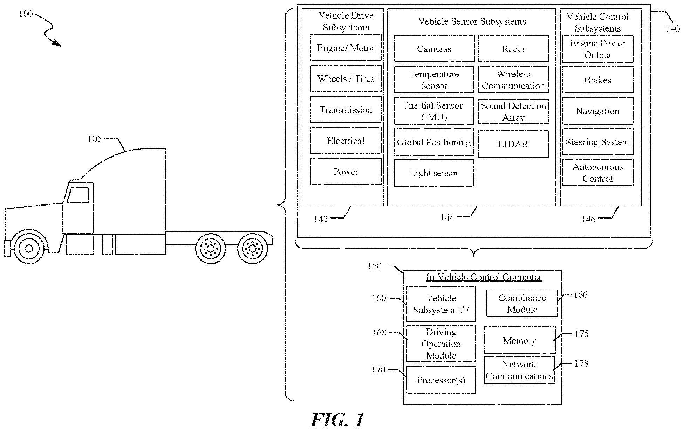

FIG. 1 shows a system 100 that includes a tractor 105 of an autonomous truck. The tractor 105 includes a plurality of vehicle subsystems 140 and an in-vehicle control computer 150. The plurality of vehicle subsystems 140 includes vehicle drive subsystems 142, vehicle sensor subsystems 144, and vehicle control subsystems. An engine or motor, wheels and tires, a transmission, an electrical subsystem, and a power subsystem may be included in the vehicle drive subsystems. The engine of the autonomous truck may be an internal combustion engine, a fuel-cell powered electric engine, a battery powered electrical engine, a hybrid engine, or any other type of engine capable of moving the wheels on which the tractor 105 moves. The tractor 105 have multiple motors or actuators to drive the wheels of the vehicle, such that the vehicle drive subsystems 142 include two or more electrically driven motors. The transmission may include a continuous variable transmission or a set number of gears that translate the power created by the engine into a force that drives the wheels of the vehicle. The vehicle drive subsystems may include an electrical system that monitors and controls the distribution of electrical current to components within the system, including pumps, fans, and actuators. The power subsystem of the vehicle drive subsystem may include components that regulate the power source of the vehicle.

Vehicle sensor subsystems 144 can include sensors for general operation of the autonomous truck 105, including those which would indicate a malfunction in the AV or another cause for an AV to perform a limited or minimal risk condition (MRC) maneuver. The sensors for general operation of the autonomous vehicle may include cameras, a temperature sensor, an inertial sensor (IMU), a global positioning system (GPS), a light sensor, a light detection and ranging (LiDAR) system, a radar system, and wireless communications.

A sound detection array, such as a microphone or array of microphones, may be included in the vehicle sensor subsystem 144. The microphones of the sound detection array are configured to receive audio indications of the presence of, or instructions from, authorities, including sirens and command such as "Pull over." These microphones are mounted, or located, on the external portion of the vehicle, specifically on the outside of the tractor portion of an autonomous truck 105. Microphones used may be any suitable type, mounted such that they are effective both when the autonomous truck 105 is at rest, as well as when it is moving at normal driving speeds.

Cameras included in the vehicle sensor subsystems 144 may be rear-facing so that flashing lights from emergency vehicles may be observed from all around the autonomous truck 105. These cameras may include video cameras, cameras with filters for specific wavelengths, as well as any other cameras suitable to detect emergency vehicle lights based on color, flashing, of both color and flashing.

The vehicle control subsystem 146 may be configured to control operation of the autonomous vehicle, or truck, 105 and its components. Accordingly, the vehicle control subsystem 146 may include various elements such as an engine power output subsystem, a brake unit, a navigation unit, a steering system, and an autonomous control unit. The engine power output may control the operation of the engine, including the torque produced or horsepower provided, as well as provide control the gear selection of the transmission. The brake unit can include any combination of mechanisms configured to decelerate the autonomous vehicle 105. The brake unit can use friction to slow the wheels in a standard manner. The brake unit may include an Anti-lock brake system (ABS) that can prevent the brakes from locking up when the brakes are applied. The navigation unit may be any system configured to determine a driving path or route for the autonomous vehicle 105. The navigation unit may additionally be configured to update the driving path dynamically while the autonomous vehicle 105 is in operation. In some embodiments, the navigation unit may be configured to incorporate data from the GPS device and one or more predetermined maps so as to determine the driving path for the autonomous vehicle 105. The steering system may represent any combination of mechanisms that may be operable to adjust the heading of autonomous vehicle 105 in an autonomous mode or in a driver-controlled mode.

The autonomous control unit may represent a control system configured to identify, evaluate, and avoid or otherwise negotiate potential obstacles in the environment of the autonomous vehicle 105. In general, the autonomous control unit may be configured to control the autonomous vehicle 105 for operation without a driver or to provide driver assistance in controlling the autonomous vehicle 105. In some embodiments, the autonomous control unit may be configured to incorporate data from the GPS device, the RADAR, the LiDAR (e.g., LIDAR), the cameras, and/or other vehicle subsystems to determine the driving path or trajectory for the autonomous vehicle 105. The autonomous control that may activate systems that the autonomous vehicle 105 has which are not present in a conventional vehicle, including those systems which can allow the autonomous vehicle 105 to communicate with surrounding drivers or signal surrounding vehicles or drivers for safe operation of the autonomous vehicle 105.

The in-vehicle control computer 150, which may be referred to as a VCU, includes a vehicle subsystem interface 160, a driving operation module 168, one or more processors 170, a compliance module 166, a memory 175, and a network communications subsystem 178. This in-vehicle control computer 150 controls many, if not all, of the operations of the autonomous truck 105 in response to information from the various vehicle subsystems 140. The one or more processors 170 execute the operations that allow the system to determine the health of the autonomous vehicle 105, such as whether the autonomous vehicle 105 has a malfunction or has encountered a situation requiring service or a deviation from normal operation and giving instructions. Data from the vehicle sensor subsystems 144 is provided to VCU 150 so that the determination of the status of the autonomous vehicle 105 can be made. The compliance module 166 may determine what action should be taken by the autonomous truck 105 to operate according to the applicable (i. e., local) regulations. Data from other vehicle sensor subsystems 144 may be provided to the compliance module 166 so that the best course of action in light of the AV's status may be appropriately determined and performed. Alternatively, or additionally, the compliance module 166 may determine the course of action in conjunction with another operational or control module, such as the driving operation module 168.

The memory 175 may contain additional instructions as well, including instructions to transmit data to, receive data from, interact with, or control one or more of the vehicle drive subsystem 142, the vehicle sensor subsystem 144, and the vehicle control subsystem 146 including the autonomous Control system. The in-vehicle control computer (VCU) 150 may control the function of the autonomous vehicle 105 based on inputs received from various vehicle subsystems (e.g., the vehicle drive subsystem 142, the vehicle sensor subsystem 144, and the vehicle control subsystem 146). Additionally, the VCU 150 may send information to the vehicle control subsystems 146 to direct the trajectory, velocity, signaling behaviors, and the like, of the autonomous vehicle 105. The autonomous control vehicle control subsystem may receive a course of action to be taken from the compliance module 166 of the VCU 150 and consequently relay instructions to other subsystems to execute the course of action.

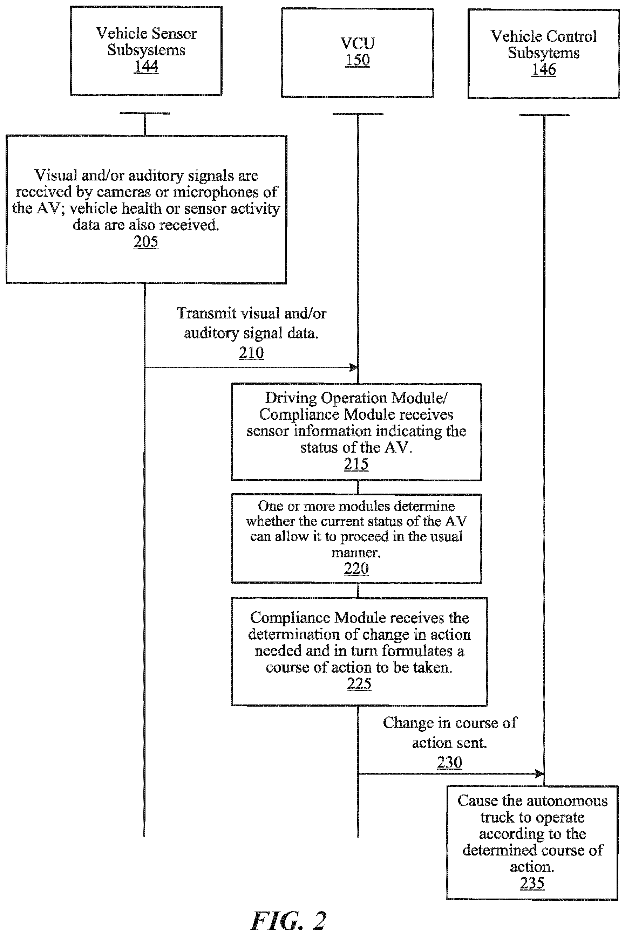

FIG. 2 shows a flow diagram for operation of an autonomous vehicle (AV) 105 safely in light of the health and surroundings of the autonomous vehicle 105. Although this figure depicts functional steps in a particular order for purposes of illustration, the process is not limited to any particular order or arrangement of steps. One skilled in the relevant art will appreciate that the various steps portrayed in this figure could be omitted, rearranged, combined and/or adapted in various ways.

As shown in FIG. 2, the vehicle sensor subsystem 144 may receive visual, auditory, or both visual and auditory signals indicating the at the environmental condition of the autonomous vehicle 105, as well as vehicle health or sensor activity data are received in step 205. These visual and/or auditory signal data are transmitted from the vehicle sensor subsystem 144 to the in-vehicle control computer system (VCU) 150, as in step 210. The driving operation module and/or the compliance module may receive the data transmitted from the vehicle sensor subsystem, in step 215. One or both of those modules may determine whether the current status of the autonomous vehicle 105 can allow it to proceed in the usual manner or that the autonomous vehicle 105 needs to alter its course to prevent damage or injury or to allow for service in step 220. The information indicating that a change to the course of the autonomous vehicle 105 is needed may include an indicator of sensor malfunction; an indicator of a malfunction in the engine, brakes, or other components necessary for the operation of the autonomous vehicle; a determination of a visual instruction from authorities such as flares, cones, or signage; a determination of authority personnel present on the roadway; a determination of a law enforcement vehicle on the roadway approaching the autonomous vehicle, including from which direction; and a determination of a law enforcement or first responder vehicle moving away from or on a separate roadway from the autonomous vehicle. This information indicating that a change to the AV's course of action is needed may be used by the compliance module to formulate a new course of action to be taken which accounts for the AV's health and surroundings, in step 225. The course of action to be taken may include slowing, stopping, moving into a shoulder, changing route, changing lane while staying on the same general route, and the like. The course of action to be taken may include initiating communications with an oversight system (e.g., a control center) or human interaction systems present on the autonomous vehicle. The course of action to be taken may then be transmitted from the VCU 150 to the autonomous control system, in step 230. The vehicle control subsystems 146 then cause the autonomous vehicle 105 to operate in accordance with the course of action to be taken that was received from the VCU 150 in step 235.

It should be understood that the specific order or hierarchy of steps in the processes disclosed herein is an example of exemplary approaches. Based upon design preferences, it is understood that the specific order or hierarchy of steps in the processes may be rearranged while remaining within the scope of the present disclosure. The accompanying method claims present elements of the various steps in a sample order and are not meant to be limited to the specific order or hierarchy presented.

### Autonomous Vehicle Oversight System

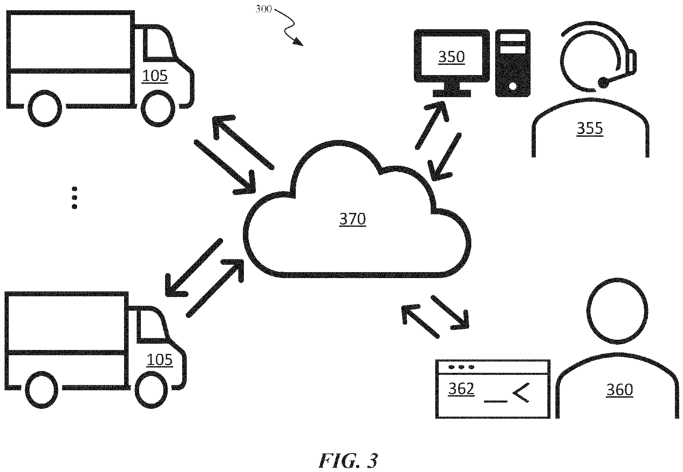

FIG. 3 illustrates a system 300 that includes one or more autonomous vehicles 105, a control center or oversight system 350 with a human operator 355, and an interface 362 for interaction with a third party 360. A human operator 355 may also be known as a remoter center operator (RCO). Communications between the autonomous vehicles 105, oversight system 350 and user interface 362 may take place over a network 370. In some instances, where not all the autonomous vehicles 105 in a fleet are able to communicate with the oversight system 350, the autonomous vehicles 105 may communicate with each other over the network 370 or directly. As described with respect to FIG. 1, the VCU 150 of each autonomous vehicle 105 may include a module for network communications 178.

An autonomous vehicle 105 may be in communication with the oversight system 350. The oversight system 350 may serve many purposes, including: tracking the progress of one or more autonomous vehicles 105 (e.g., an autonomous truck); tracking the progress of a fleet of autonomous vehicles 105; sending maneuvering instructions to one or more autonomous vehicles 105; monitoring the health of the autonomous vehicle(s) 105; monitoring the status of the cargo of each autonomous vehicle 105 in contact with the oversight system 350; facilitate communications between third parties (e.g., law enforcement, clients whose cargo is being carried) and each, or a specific, autonomous vehicle 105; allow for tracking of specific autonomous vehicles 105 in communication with the oversight system 350 (e.g., third party tracking of a subset of vehicles in a fleet); arranging maintenance service for the autonomous vehicles 105 (e.g., oil changing, fueling, maintaining the levels of other fluids); alerting an affected autonomous vehicle 105 of changes in traffic or weather that may adversely impact a route or delivery plan; pushing over the air updates to autonomous vehicles 105 to keep all components up to date; and other purposes or functions that improve the safety for the autonomous vehicle 105, its cargo, and its surroundings. An oversight system 350 may also determine performance parameters of the autonomous vehicle 105 (e.g. an autonomous truck), including any of: data logging frequency, compression rate, location, data type; communication prioritization; how frequently to service the autonomous vehicle 105 (e.g., how many miles between services); when to perform a minimal risk condition (MRC) maneuver while monitoring the vehicle's progress during the maneuver; when to hand over control of the autonomous vehicle 105 to a human driver (e.g., at a destination yard); ensuring the autonomous vehicle 105 passes pre-trip inspection; ensuring the autonomous vehicle 105 performs or conforms to legal requirements at checkpoints and weight stations; ensuring the autonomous vehicle 105 performs or conforms to instructions from a human at the site of a roadblock, cross-walk, intersection, construction, or accident; and the like.

To allow for communication between autonomous vehicles 105 in a fleet and the oversight system 350, each autonomous vehicle 105 may be equipped with a communication gateway. The communication gateway may have the ability to do any of the following: allow for AV to oversight system communication (i.e. V2C) and the oversight system to AV communication (C2V); allow for AV to AV communication within the fleet (V2V); transmit the availability or status of the communication gateway; acknowledge received communications; ensure security around remote commands between the autonomous vehicle 105 and the oversight system 350; convey the autonomous vehicle's location reliably at set time intervals; enable the oversight system 350 to ping the autonomous vehicle 105 for location and vehicle health status; allow for streaming of various sensor data directly to the oversight system 350; allow for automated alerts between the autonomous vehicle 105 and the oversight system 350; comply to ISO 21434 standards; and the like.

The oversight system 350 may be operated by one or more human, also known as an operator or a remote center operator (RCO) 355. The operator 355 may set thresholds for autonomous vehicle health parameters, so that when an autonomous vehicle 105 meets or exceeds the threshold, precautionary action may be taken. Examples of vehicle health parameters for which thresholds may be established by the operator 355 may include any of: fuel levels; oil levels; miles traveled since last maintenance; low tire-pressure detected; cleaning fluid levels; brake fluid levels; responsiveness of steering and braking subsystems; Diesel exhaust fluid (DEF) level; communication ability (e.g., lack of responsiveness); positioning sensors ability (e.g., GPS, IMU malfunction); impact detection (e.g., vehicle collision); perception sensor ability (e.g., camera, LiDAR, radar, microphone array malfunction); computing resources ability (e.g., VCU or ECU malfunction or lack of responsiveness, temperature abnormalities in computing units); angle between a tractor and trailer of the autonomous vehicle 105 in a towing situation (e.g., tractor-trailer, 18-wheeler, or semi-truck); unauthorized access by a living entity (e.g., a person or an animal) to the interior of the autonomous vehicle 105; and the like. The precautionary action may include execution of a minimal risk condition (MRC) maneuver, seeking service, or exiting a highway or other such re-routing that may be less taxing on the autonomous vehicle 105. An autonomous vehicle 105 whose system health data meets or exceeds a threshold set at the oversight system 350 or by the operator 355 may receive instructions that are automatically sent from the oversight system 350 to perform the precautionary action.

The operator 355 may be made aware of situations affecting one or more autonomous vehicles 105 in communication with or being monitored by the oversight system 350 that the affected autonomous vehicle(s) 105 may not be aware of. Such situations may include: irregular or sudden changes in traffic flow (e.g., traffic jam or accident); abrupt weather changes; abrupt changes in visibility; emergency conditions (e.g., fire, sink-hole, bridge failure); power outage affecting signal lights; unexpected road work; large or ambiguous road debris (e.g., object unidentifiable by the autonomous vehicle); law enforcement activity on the roadway (e.g., car chase or road clearing activity); and the like. These types of situations that may not be detectable by an autonomous vehicle 105 may be brought to the attention of the operator 355 through traffic reports, law enforcement communications, data from other vehicles that are in communication with the oversight system 350, reports from drivers of other vehicles in the area, and similar distributed information venues. The autonomous vehicle 105 may not be able to detect such situations because of limitations of sensor systems or lack of access to the information distribution means (e.g., no direct communication with weather agency). An operator 355 at the oversight system 350 may push such information to affected autonomous vehicles 105 that are in communication with the oversight system 350. The affected autonomous vehicles 105 may proceed to alter their route, trajectory, or speed in response to the information pushed from the oversight system 350. In some instances, the information received by the oversight system 350 may trigger a threshold condition indicating that MRC (minimal risk condition) maneuvers are warranted; alternatively, or additionally, an operator 355 may evaluate a situation and determine that an affected autonomous vehicle 105 should perform an MRC maneuver and subsequently send such instructions to the affected vehicle. In these cases, each autonomous vehicle 105 receiving either information or instructions from the oversight system 350 or the operator 355 uses its on-board computing unit (i.e. VCU) to determine how to safely proceed, including performing an MRC maneuver that includes pulling-over or stopping.

### Systems and Methods for Communicating with Third Parties

As described herein, an autonomous vehicle 105 may need to terminate autonomous navigation, which can involve stopping the autonomous vehicle 105 and/or pulling over to the side of the road under certain conditions, such as unsafe environmental conditions and/or mechanical/electrical malfunctions. In some situations, the autonomous vehicle 105 can be configured to perform an MRC maneuver in which the autonomous vehicle 105 autonomously maneuvers to a stopping location. In some embodiments, the MRC maneuver can be performed under supervision of an operator 355 via the oversight system 350.

While stopped on or at the side of the roadway, third parties may arrive at the location of the autonomous vehicle 105 to help resolve the situation that triggered the autonomous vehicle 105 to stop. For example, if the autonomous vehicle 105 was involved in an accident, one or more first responders may arrive at the location of the accident to help maintain the flow of traffic, get the autonomous vehicle 105 and any other vehicles involved in the accident off of the roadway/shoulder, and/or respond to any injuries resulting from the accident. Examples of first responders that may show up to the scene of an accident include: police officers, firefighters, emergency medical technicians (EMT), etc.

As another example, third parties may arrive to provide aid when the autonomous vehicle 105 is stopped due to mechanical/electrical malfunctions. In the event of a mechanical and/or electrical failure that cannot be repaired at the roadside (e.g., an engine failure), a tow truck driver may respond to tow the autonomous vehicle 105 to a mechanic shop. In the event of a mechanical and/or electrical failure that can be repaired at the roadside (e.g., a flat tire), a roadside mechanical may respond to tow the autonomous vehicle 105 to repair the mechanical and/or electrical failure, thereby enabling the autonomous vehicle 105 to either continue along its predetermined route or to navigate to a mechanic shop for more intensive repairs.

Because autonomous vehicles 105 may be operated without any human operator present, it can be desirable to provide a user interface that enables authorized third parties to communicate with the autonomous vehicles 105 and/or an operator 355 of the oversight system 350. In some embodiments, the oversight system 350 can be configured to communicate with third parties via an application installed on the third party's mobile device. However, this may be inconvenient for the third parties since each individual seeking to communicate with the autonomous vehicle 105/oversight system 350 needs to download and install the mobile device application which can be time consuming or impossible depending on the availability of cellular data at the site of the stopped autonomous vehicle 105.

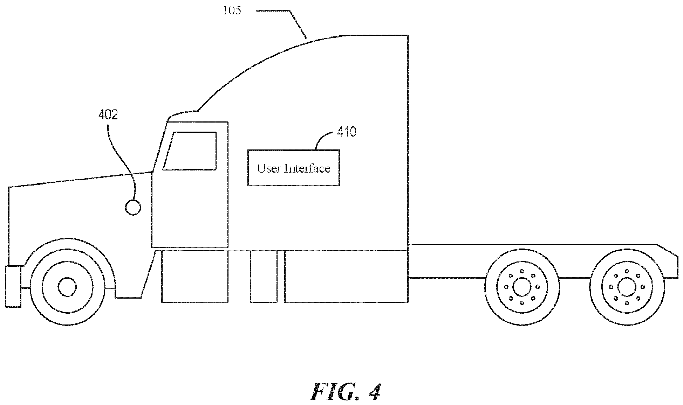

Aspects of this disclosure provide systems and methods for enabling authorized third parties to communicate with the autonomous vehicle 105 and/or oversight system 350 when the autonomous vehicle is stopped on or near the roadway. FIG. 4 illustrates an example autonomous vehicle 105 having a communication system for communicating with third parties in accordance with aspects of this disclosure.

With reference to FIG. 4, the autonomous vehicle 105 includes a first user interface 402 and a second user interface 410. The first user interface 402 may include a variety of input and/or output devices, including, e.g., an emergency stop button, a touch panel, a toggle switch, a capacitive touch sensor, a resistive touch sensor, a pushbutton, a keypad, a keyboard, a barcode reader, or a quick response (QR) code reader, a camera, a microphone, or a speaker. The first user interface 402 may be located on the exterior of the autonomous vehicle 105, for example, on or near a door of the cab of the autonomous vehicle 105. When mounted to the exterior of the autonomous vehicle, the first user interface 402 may be referred to as an external user interface. In other embodiments, the first user interface 402 may be placed in a location in which the first user interface 402 is not visible from the exterior of the autonomous vehicle 105, thereby preventing unauthorized users from easily locating the first user interface 402. For example, the first user interface 402 may be located under the hood of the autonomous vehicle 105 or behind a service panel of the autonomous vehicle 105.

The first user interface 402 may be configured to allow an authorized third party to gain access to the cab of the autonomous vehicle 105. For example, upon pressing an unlock button on the first user interface 402, the autonomous vehicle 105 may be configured to unlock the door to the cab. The second user interface 410 may be placed in a location that can be easily accessed from inside the cab, for example, by a third party sitting in the driver's seat.

In some embodiments, the cab of the autonomous vehicle 105 may also include a QR code in place of or in addition to the first user interface 402. The third party can scan the QR code to initiate two-way communication with an operator 355 at the oversight system 350. The operator 355 can remotely unlock the cab to provide the third party access to the cab based on the communication with the third party.

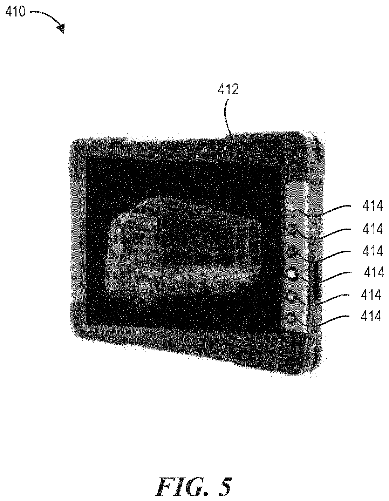

FIG. 5 illustrates an example second user interface 410 in accordance with aspects of this disclosure. As shown in FIG. 5, the second user interface 410 may include a display 412 and a plurality of optional buttons 414. In some implementations, the display 412 may be embodied as a touch screen enabling the third party to directly input provide input via the screen. The second user interface 410 may also be configured to receive input via one of more of the buttons 414. According to some example embodiments, the second user interface 410 may be an application running on a mobile device, such as a smartphone, mobile phone, laptop, or tablet.

The second user interface 410 may be configured to provide information and/or allow the third party to communicate with the oversight system 350 depending on the particular needs of the third party. In particular, second the user interface 410 may be configured to provide two-way communication (e.g., text, voice, and/or video) between the third party and an operator 355 at the oversight system. The second user interface 410 may be configured to provide a number of different functions to the third-party. For example, the second user interface 410 can be configured to provide one or more of the following functions: user login, generate report(s) on the status of the autonomous vehicle 105, generate a display of the health of the autonomous vehicle 105, transmit a request for towing of the autonomous vehicle 105, provide two-way communication between a third party and an operator 355 located at an oversight system 350, etc.

In some embodiments, the first user interface 402 may lock all of the functionality behind the user login, thereby preventing unauthorized third parties from accessing information of the autonomous vehicle 105 as well as preventing the unauthorized third parties from controlling the autonomous vehicle 105. After the first user interface 402 has authenticated the third party based on the credentials input by the third party, the second user interface 410 may provide the third party access to one or more different functionalities. In some embodiments, the functionalities accessible by a given third party may depend on an access level assigned to the third party. As described herein, the user login functionality may be performed at least partially by an operator 355 at the oversight system 350 in order to confirm that the third party is authorized to access the second user interface 410 and/or the autonomous vehicle.

There are a number of different situations in which a third party may use the second user interface 410. In a first example scenario, the autonomous vehicle 105 may be involved in an accident. In responding to the accident, a third party, such as a first responder, may user the second user interface 410 to disengage the autonomous system such that the autonomous vehicle 105 does not take any actions while the first responder is responding to the accident.

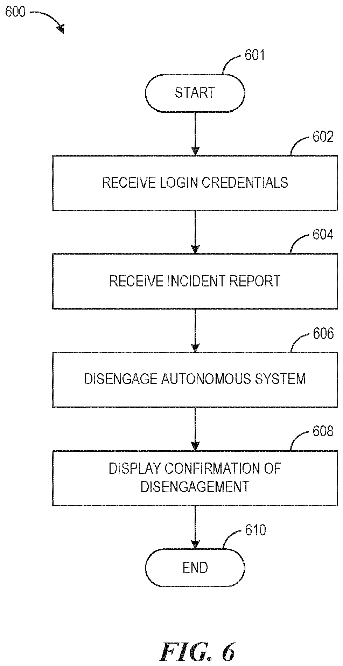

FIG. 6 is a flowchart illustrating a method 600 for interacting with a third party in the event of the autonomous vehicle 105 being involved in an accident in accordance with aspect of this disclosure. With reference to FIG. 6, one or more blocks of the method 600 may be implemented, for example, by a processor of the second user interface 410. The method 600 begins at block 601.

At block 602, the second user interface 410 may be configured to receive login credentials from the third party and login the third party. For example, the second user interface 410 may display a login screen with fields to accept the third party's login credentials and/or may receive the third party's login credentials via an electronic communication interface (e.g., an NFC sensor).

In some implementations, the user may not have an account and/or preregistered login credentials enabling the third party to be logged in automatically. Thus, the second user interface 410 may be further configured to communicate with an operator 355 at the oversight system 350 such that the operator 355 can help authenticate that the third party is authorized to access the second user interface 410. The operator 355 may authenticate the third party via a number of different techniques. For example, when the third party is a police officer, the operator 355 may request the officer's badge number and confirm that the badge number is present in a database of police officer badge numbers. In some embodiments, the second user interface 410 and/or the first user interface 402 may be configured to capture an image of the third party's face and run a facial recognition algorithm on the captured image. If the third party's face has been registered with a database of authorized users, the facial recognition of the captured image may help the second user interface 410 and/or the operator 355 authenticate the third party.

After the third party has logged in, the second user interface 410 may display a menu of available commands. At block 604, the second user interface 410 may receive an incident report from the third party. For example, the third party may select an incident report icon and input details regarding the accident into the second user interface 410. The second user interface 410 may accept the details in a number of different formats, such as a list of incident descriptions selectable by the third party, a text field allowing the third party to describe the incident, etc.

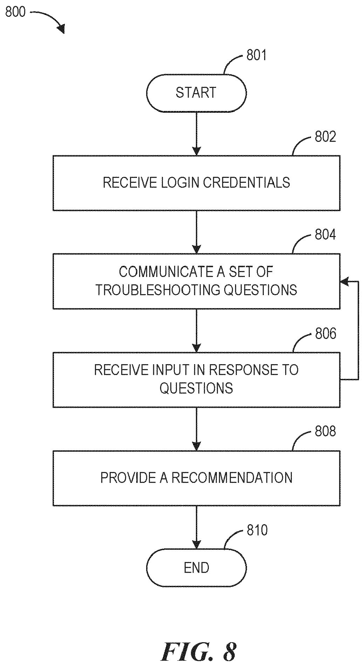

In response to a request input by the third party, at block 606 the second user interface 410 may disengage the autonomous system from control of the autonomous vehicle 105. After disengaging the autonomous system from control of the autonomous vehicle 105, at block 608 the second user interface 410 may display a confirmation of the disengagement. After the autonomous system has been disengaged, the third party may be allowed to manually drive the autonomous vehicle 105. For example, the third party may be allowed to move the autonomous vehicle to a safe location away from traffic. The second user interface 410 may also be configured to provide a recommendation to the third party based on the incident report. For example, if the second user interface 410 receives a signal from the vehicle sensor subsystem that the autonomous vehicle 105 has been turned on its side, the second user interface 410 may be configured to provide a recommendation to disengage the electrical system. More details on the format of the recommendation are described in connection with FIG. 8. The method 600 ends at block 610.

In a second example scenario, the autonomous vehicle 105 may require a roadside inspection. An autonomous vehicle 105 may enter a roadside inspection site at which a third party may require information regarding the autonomous vehicle 105 prior to allowing the autonomous vehicle 105 to proceed. The second user interface 410 can be configured to display information requested by the third party as part of the roadside inspection.

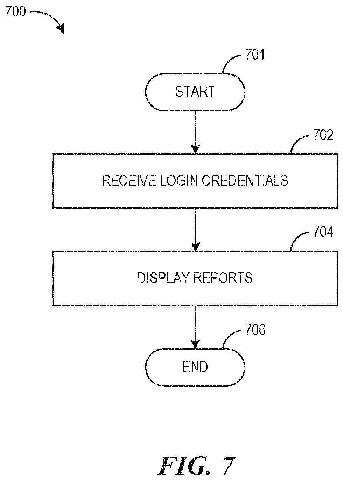

FIG. 7 is a flowchart illustrating a method 700 for interacting with a third party in the event of the autonomous vehicle 105 arriving at a roadside inspection location, in accordance with aspects of this disclosure. With reference to FIG. 7, one or more blocks of the method 700 may be implemented, for example, by a processor of the second user interface 410. The method 700 begins at block 701.

At block 702, the second user interface 410 may be configured to receive login credentials from the third party and login the third party. This block may be substantially the same as block 602 described in connection with FIG. 6.

At block 704, the second user interface 410 may be configured to display one or more reports in response to receiving a selection from the third party. For example, in response to the third party selecting a roadside inspection icon, the second user interface 410 may be configured to display a set of reports that may be generated in compliance with local regulations. For example, the second user interface 410 may display a Daily Vehicle Inspection Report (DVIR), a status report indicating the health status of the autonomous vehicle 105, a maintenance history of the autonomous vehicle 105, and/or a pre-trip inspection report. The second user interface 410 may enable the third party to scroll and search the displayed reports, print one or more of the reports in full or in part, email the information contained in the reports, etc. The method 700 ends at block 706.

The second user interface 410 also may be configured to display other information in addition to the reports in compliance with local regulations. For example, in response to receiving an input from the third party, the second user interface 410 may be configured to display other health information of the autonomous vehicle 105, including for example, the trailer's power line communication (PLC) line and ABS health. When connected to a third-party trailer management system and/or a tire monitoring system, the second user interface 410 may be configured to display health status and/or report on information from the trailer management system and/or the tire monitoring system. The second user interface 410 may also record what information has been displayed based on inputs received from the third party and report the records to the oversight system 350 for logging, tracing and/or auditing purposes.

In a third example scenario, the autonomous vehicle 105 may stop on the side of the roadway in response to detecting a mechanical and/or electrical breakdown. The second user interface 410 can be configured to allow a third party, such as a technician or mechanic, to access information useful to addressing the breakdown to get the autonomous vehicle 105 back in working order.

FIG. 8 is a flowchart illustrating a method 800 for interacting with a third party in the event of the autonomous vehicle 105 experiencing a breakdown in accordance with some aspects of this disclosure. With reference to FIG. 8, one or more blocks of the method 800 may be implemented, for example, by a processor of the second user interface 410. The method 800 begins at block 801.

At block 802, the second user interface 410 may be configured to receive login credentials from the third party and login the third party. This block may be substantially the same as block 602 described in connection with FIG. 6.

At block 804, the second user interface 410 may be configured to communicate a set of troubleshooting questions in response to the user selecting a road side assistance icon. In one embodiment, the second user interface 410 may be configured to display a set of predetermined troubleshooting questions that can identify a set of common breakdown conditions for the autonomous vehicle 105. In other embodiments, the second user interface 410 can be configured to communicate the set of troubleshooting questions from the operator 355 at the oversight system 350 to the third party. In some implementations, the second user interface 410 may be configured to communicate a combination of predetermined troubleshooting questions, and in response to narrowing down the source of the breakdown, the operator 355 may receive the results of the troubleshooting questions and communicate with the third party to identify the reason for the breakdown.

At block 806, the second user interface 410 may be configured to receive input from the third party in response to the troubleshooting questions. The method 800 may loop through blocks 804 and 806 until the second user interface 410 has identified and/or narrowed down the source of the breakdown. Depending on the implementation, the second user interface 410 may receive the input in one or more of the following formats: selection of a predetermined response to the troubleshooting question, input of text into a response field, and/or via voice input which can be transmitted to the operator 355.

At block 808, in response to determining or narrowing down the source of the breakdown, the second user interface 410 may be configured to provide a recommendation for fixing or addressing the breakdown to the third party. Depending on the implementation, the second user interface 410 may provide one or more of the following: a text description of the recommendation, a set of one or more pictographs of the recommendation, a video illustrating the recommendation, and/or a voice command describing the recommendation. The second user interface 410 may also be configured to receive a confirmation and/or modification of the recommendation, for example, in response to the third party attempting to repair the breakdown. The method 800 ends at block 810.

In a fourth example scenario, the autonomous vehicle 105 may encounter the scene of an accident from which traffic is being diverted. The second user interface 410 can be configured to allow a third party, such as a police officer directing traffic, to provide instructions to the autonomous vehicle 105 to re-route the autonomous vehicle 105 along a detour. In some embodiments, the second user interface 410 can provide a communication link (e.g., a voice call) between the third party and an operator 355 at the oversight system 350. The operator 355 can then provide instructions to the autonomous vehicle 105 to follow the detour.

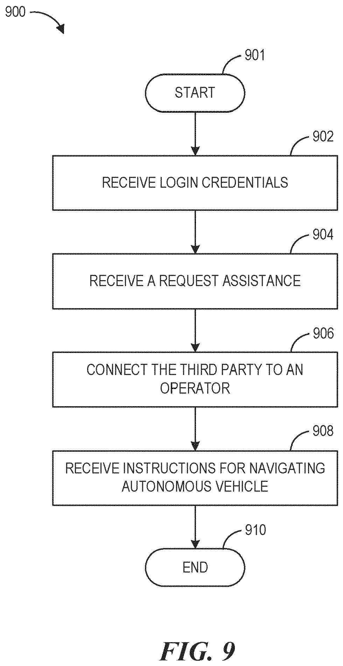

FIG. 9 is a flowchart illustrating a method 900 for interacting with a third party in the event of the autonomous vehicle 105 arriving at an accident scene in accordance with aspects of this disclosure. For example, the method 900 may be executed when the accident scene requires that traffic is diverted and the autonomous vehicle 105 must be rerouted to avoid the scene of the accident. With reference to FIG. 9, one or more blocks of the method 900 may be implemented, for example, by a processor of the second user interface 410. The method 900 begins at block 901.

At block 902, the second user interface 410 may be configured to receive login credentials from the third party and login the third party. This block may be substantially the same as block 602 described in connection with FIG. 6.

At block 904, the second user interface 410 may receive a request for assistance from the third party. At block 906, the second user interface 410 may connect the third party to an operator 355 at the oversight system 350, for example, via audio and/or video. The third party can describe the scene to the operator 355 and provide instructions to the operator 355 regarding how the autonomous vehicle 105 should navigate the scene in order to safely avoid obstacles and/or objects in the scene. The scene may include, for example, in a work zone, a traffic enforcement scene, or the scene of an accident.

At block 908, after the operator 355 has received sufficient instructions for avoiding the scene, the second user interface 410 can receive instructions from the oversight system 350 to navigate the autonomous vehicle 105 to safely avoid the scene. The second user interface 410 can provide the instructions to the vehicle control subsystems 146 and navigate the autonomous vehicle 105 around the scene of the accident. In other embodiments, the autonomous vehicle 105 may receive instructions directly from the operator 355 enabling the operator 355 to remotely control the autonomous vehicle 105 until the autonomous vehicle 105 has left the scene. The operator 355 can then release control of the autonomous vehicle 105, letting the autonomous vehicle 105 continue on its route. The method 900 ends at block 910.

In a fifth example scenario, the autonomous vehicle 105 may arrive at a construction site, either near or on the roadway. The second user interface 410 can be configured to allow a third party, such as a construction worker, to re-route the autonomous vehicle 105 around the construction site. In some embodiments, the second user interface 410 can provide a communication link (e.g., a voice call) between the third party and the operator 355 at the oversight system 350. In other embodiments, the second user interface 410 can detect and interpret the hand signals of the third party and control the autonomous vehicle 105 based on the hand signals.

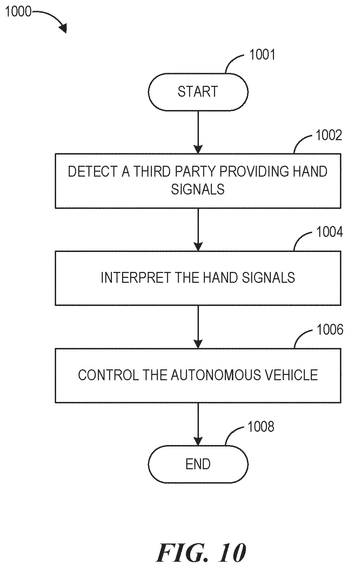

FIG. 10 is a flowchart illustrating a method 1000 for interacting with a third party in the event of the autonomous vehicle 105 arriving at a construction site in accordance with aspects of this disclosure. For example, the method 1000 may be executed when the accident scene requires that traffic is diverted and the autonomous vehicle 105 must be rerouted to avoid the scene of the accident. With reference to FIG. 10, one or more blocks of the method 1000 may be implemented, for example, by a processor of the second user interface 410. The method 1000 begins at block 1001.

In some embodiments, the second user interface 410 may be configured to receive voice commands from the third party for navigating through the construction site. In these embodiments, the second user interface 410 may be configured to connect the third party to an operator 355 as described in connection with FIG. 9.

In other embodiments, the second user interface 410 may be configured to receive instructions from the third party in the form of hand signals without requiring to receive voice commands from the third party. The method 1000 describes an embodiment for receiving instructions via hand signals. At block 1002, the second user interface 410 may be configured to detect that a third party is providing hand signals to the autonomous vehicle 105. The second user interface 410 may be configured to receive a video feed from one or more of the cameras on the exterior of the autonomous vehicle 105 to recognize that the third party is providing hand signals.

At block 1004, the second user interface 410 may be configured to interpret the hand signals. For example, the second user interface 410 may be configured to recognize a standardized set of hand signals typically used in directing traffic. However, if the third party's hand signals are not recognizable by the second user interface 410, the second user interface 410 may connect to an operator 355 to request the operator 355 to provide an interpretation of the hand signals. The request may include a recorded video of the hand signals detected from the third party. The second user interface 410 may receive an interpretation of the hand signals from the operator 355 or the second user interface 410 may receive instructions from the operator 355 enabling the operator 355 to take over control of the autonomous vehicle 105. In order to detect and interpret the hand signals, the VCU 150 may obtain images of the third party from the vehicle sensor subsystem. The VCU 150 may use a hand signal classifier to determine whether the hand signals correspond to the standardized set of hand signals. The hand signal classifier may be trained using a training set that includes images of the standardized hand signals.

At block 1006, the second user interface 410 may control the autonomous vehicle 105 based on the interpretation of the hand signals. In embodiments where the operator 355 has taken over remote control of the autonomous vehicle 105, the autonomous vehicle 105 may receive control instructions directly from the operator 355 until the operator 355 returns control back to the autonomous vehicle 105. The method 1000 ends at block 1008.

While the blocks of FIGs. 6-10 are described as being performed by the second user interface 410, in certain implementations some of all of the blocks may also be performed by the VCU 150 or a mobile device of the third party without departing from aspects of this disclosure.

### Conclusion

Though much of this document refers to an autonomous truck, it should be understood that any autonomous ground vehicle may have such features. Autonomous vehicles which traverse over the ground may include: semis, tractor-trailers, 18 wheelers, lorries, class 8 vehicles, passenger vehicles, transport vans, cargo vans, recreational vehicles, golf carts, transport carts, and the like.

While several embodiments have been provided in this disclosure, it should be understood that the disclosed systems and methods might be embodied in many other specific forms without departing from the spirit or scope of this disclosure. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of this disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the scope disclosed herein.

The following numbered items are disclosed herein, the subject matter of which can be combined in any reasonable manner.
1. An apparatus comprising: at least one processor; and
   at least one memory including computer program code, the at least one memory and the computer program code configured to, with the at least one processor, cause the apparatus to: receive a signal from a first user interface mounted to an exterior of an autonomous vehicle; in response to the signal being received, establish a two way communication between the first user interface and a remote system; authenticate a third party; in response to the third party being authenticated, establish a connection with a second user interface.
2. The apparatus of Item 1, wherein to authenticate the third party, the at least one memory and computer program code are configured to, with the at least one processor, further cause the apparatus to: receive, from the first user interface, login credentials; send the login credentials to the remote system; and receive, from the remote system, and indication that the third party is authenticated.
3. The apparatus of Item 2, wherein the login credentials comprise at least one of a badge number, a security code, a user name, and a password.
4. The apparatus of Item 1, wherein the at least one memory and computer program code are configured to, with the at least one processor, further cause the apparatus to: in response to the third party being authenticated, provide an access to the second user interface.
5. The apparatus of Item 4, wherein the second user interface is mounted to an interior compartment of an autonomous vehicle and wherein to provide access to the second user interface, the at least one memory and computer program code are configured to, with the at least one processor, further cause the apparatus to provide access to the interior compartment of the autonomous vehicle.
6. The apparatus of Item 1, wherein the second user interface comprises or is comprised in a mobile telephone or smartphone.
7. The apparatus of Item 1, wherein the at least one memory and computer program code are configured to, with the at least one processor, further cause the apparatus to: receive, from the second user interface, an incident report including information regarding an accident involving the autonomous vehicle.
8. The apparatus of Item 7, wherein the at least one memory and computer program code are configured to, with the at least one processor, further cause the apparatus to: display, at the second user interface, at least one of a selectable list of incident descriptions and a text field.
9. The apparatus of Item 1, wherein the at least one memory and computer program code are configured to, with the at least one processor, further cause the apparatus to: receive, from the second user interface, a request to disengage an autonomous mode of the autonomous vehicle; and in response to the request to disengage being received, disengage the autonomous system from the autonomous vehicle in order to enable manual operation of the autonomous vehicle.
10. The apparatus of Item 1, wherein the at least one memory and computer program code are configured to, with the at least one processor, further cause the apparatus to: receive, from the second user interface, a request to display an inspection report; and in response to the request to display the inspection report being received, display a report in compliance with local regulations.
11. The apparatus of Item 10, wherein the displayed report comprises at least one of a health status of the autonomous vehicle health status, a maintenance history of the autonomous vehicle, a pre trip inspection report for the autonomous vehicle, and a driver vehicle inspection report for the autonomous vehicle.
12. The apparatus of Item 10, wherein the at least one memory and computer program code are configured to, with the at least one processor, further cause the apparatus to: record information displayed in the report, and transmit the recorded information to the remote system to enable a tracking and/or auditing of the autonomous vehicle.
13. The apparatus of Item 1, wherein the signal received from the first user interface comprises an emergency stop signal.
14. The apparatus of Item 1, wherein the at least one memory and computer program code are configured to, with the at least one processor, further cause the apparatus to: receive, from the second user interface, a request to diagnose a breakdown of the autonomous vehicle; in response to the request to diagnose the breakdown being received, send, to the second user interface, a set of troubleshooting questions; and receive, from the second user interface, responses to the set of troubleshooting questions.
15. The apparatus of Item 14, wherein the at least one memory and computer program code are configured to, with the at least one processor, further cause the apparatus to: generate a recommendation for addressing the breakdown based on the received responses; and send, to the second user interface, a request to display the recommendation.
16. The apparatus of Item 15, wherein the recommendation comprises at least one of a text description of the recommendation, a set of one or more pictographs of the recommendation, a video illustrating the recommendation, and a voice command describing the recommendation.
17. The apparatus of Item 1, wherein the at least one memory and computer program code are configured to, with the at least one processor, further cause the apparatus to: receive, from the second user interface, a description of a path the autonomous vehicle can use to navigate an accident scene; send, to the remote system, the description of the path; and receive, from the remote system, navigation commands to enable the autonomous vehicle to navigate the accident scene.
18. The apparatus of Item 17, wherein the navigation commands received from the remote system comprises a remote control of the autonomous vehicle by the remote system.
19. The apparatus of Item 1, wherein the two way communication comprises at least one of a speech to text and a text to speech communication.
20. The apparatus of Item 1, wherein the at least one memory and computer program code are configured to, with the at least one processor, further cause the apparatus to:
   receive images from a camera located on the autonomous vehicle; detect that a person is present in the images; and determine that the person is exhibiting hand signals in order to direct traffic.
21. The apparatus of Item 20, wherein the at least one memory and computer program code are configured to, with the at least one processor, further cause the apparatus to: interpret the hand signals exhibited by the person; provide controls for navigating the autonomous vehicle based on the interpreted hand signals.
22. The apparatus of Item 21, wherein to provide controls for navigating the autonomous vehicle, the at least one memory and computer program code are configured to, with the at least one processor, further cause the apparatus to: transmit, to the remote system, the images including the hand signals; receive, from the remote system, an interpretation of the hand signals; and provide controls for navigating the autonomous vehicle based on the received interpretation.
23. A method comprising: receiving a signal from a first user interface mounted to an exterior of an autonomous vehicle; in response to receiving the signal from the first user interface, establish a two way communication between the first user interface and a remote system; authenticating a third party; and in response to authenticating the third party, establishing a connection with a second user interface.
24. A computer-readable medium storing computer program instructions which, when executed by at least one processor, cause the at least one processor to:
   receive a signal from a first user interface mounted to an exterior of an autonomous vehicle; in response to the signal being received, establish a two way communication between the first user interface and a remote system; authenticate a third party; in response to the third party being authenticated, establish a connection with a second user interface.

## Claims

1. A computer-implemented method comprising:
receiving a signal from a first user interface mounted to an exterior of an autonomous vehicle;
in response to the signal being received, establishing a two way communication between the first user interface and a remote system;
authenticating a third party;
in response to the third party being authenticated, establishing a connection with a second user interface.

2. The method of claim 1, wherein to authenticate the third party, method further comprises:
receiving, from the first user interface, login credentials;
sending the login credentials to the remote system; and
receiving, from the remote system, and indication that the third party is authenticated;
optionally wherein the login credentials comprise at least one of a badge number, a security code, a user name, and a password.

3. The method of claim 1 or claim 2, further comprising, in response to the third party being authenticated, providing an access to the second user interface;
optionally wherein the second user interface is mounted to an interior compartment of an autonomous vehicle; and wherein to provide access to the second user interface, the method further comprises providing access to the interior compartment of the autonomous vehicle.

4. The method of any preceding claim, further comprising:
receiving, from the second user interface, an incident report including information regarding an accident involving the autonomous vehicle; the method optionally further comprising:
displaying, at the second user interface, at least one of a selectable list of incident descriptions and a text field.

5. The method of any preceding claim, further comprising:
receiving, from the second user interface, a request to disengage an autonomous mode of the autonomous vehicle; and
in response to the request to disengage being received, disengaging the autonomous system from the autonomous vehicle in order to enable manual operation of the autonomous vehicle.

6. The method of any preceding claim, further comprising
receiving, from the second user interface, a request to display an inspection report; and
in response to the request to display the inspection report being received, displaying a report in compliance with local regulations;
optionally wherein the displayed report comprises at least one of a health status of the autonomous vehicle health status, a maintenance history of the autonomous vehicle, a pre trip inspection report for the autonomous vehicle, and a driver vehicle inspection report for the autonomous vehicle;
the method optionally further comprising:
recording information displayed in the report, and
transmitting the recorded information to the remote system to enable a tracking and/or auditing of the autonomous vehicle.

7. The method of any preceding claim, further comprising:
receiving, from the second user interface, a request to diagnose a breakdown of the autonomous vehicle;
in response to the request to diagnose the breakdown being received, sending, to the second user interface, a set of troubleshooting questions; and
receiving, from the second user interface, responses to the set of troubleshooting questions.

8. The method of claim 7, further comprising:
generating a recommendation for addressing the breakdown based on the received responses; and
sending, to the second user interface, a request to display the recommendation;
optionally wherein the recommendation comprises at least one of a text description of the recommendation, a set of one or more pictographs of the recommendation, a video illustrating the recommendation, and a voice command describing the recommendation.

9. The method of any preceding claim, further comprising:
receiving, from the second user interface, a description of a path the autonomous vehicle can use to navigate an accident scene;
sending, to the remote system, the description of the path; and
receiving, from the remote system, navigation commands to enable the autonomous vehicle to navigate the accident scene.

10. The method of claim 9, wherein the navigation commands received from the remote system comprises a remote control of the autonomous vehicle by the remote system.

11. The method of any preceding claim, wherein the at least one memory and computer program code are configured to, with the at least one processor, further cause the apparatus to:
receive images from a camera located on the autonomous vehicle;
detect that a person is present in the images; and
determine that the person is exhibiting hand signals in order to direct traffic.

12. The method of claim 11, further comprising:
interpreting the hand signals exhibited by the person;
providing controls for navigating the autonomous vehicle based on the interpreted hand signals.

13. The method of claim 12, wherein to provide controls for navigating the autonomous vehicle, the method further comprises:
transmitting, to the remote system, the images including the hand signals;
receiving, from the remote system, an interpretation of the hand signals; and
providing controls for navigating the autonomous vehicle based on the received interpretation.

14. A computer-readable medium storing computer program instructions which, when executed by at least one processor, cause the at least one processor to perform the method of any preceding claim.

15. An apparatus comprising:
at least one processor; and
at least one memory including computer program code, the at least one memory and the computer program code configured to, with the at least one processor, cause the apparatus to perform the method of any of claims 1 to 13.
